# EUROPÄISCHE PATENTSCHRIFT

(11) **EP 0 589 380 B1**
(45) Veröffentlichungstag und Bekanntmachung des Hinweises auf die Patenterteilung: **23.12.1998**
(21) Anmeldenummer: 93115062.7
(22) Anmeldetag: 20.09.1993
(51) Int. Cl.: F16B 37/04, E04B 1/38

(54) **Mutterartiges Element zum Festlegen in einem Innenraum**
Nutlike element for fastening in a cavity
Elément du genre d'écrou pour la fixation dans une cavité

(30) Priorität: 23.09.1992 DE 9212696 U; 21.11.1992 DE 9215843 U
(43) Veröffentlichungstag der Anmeldung: 30.03.1994
(73) Patentinhaber: Holscher, Winfried K.W., D-78224 Singen (DE)
(72) Erfinder: Holscher, Winfried K.W., D-78224 Singen (DE)
(74) Vertreter: Hiebsch, Gerhard F., Dipl.-Ing.

(56) Entgegenhaltungen:
- DE-A- 1 775 246
- DE-A- 2 635 439
- DE-A- 3 703 531
- DE-U- 9 207 805
- GB-A- 602 540
- US-A- 4 315 393
- US-A- 5 032 047

## Beschreibung

Die Erfindung betrifft eine Verbindungseinrichtung nach dem Oberbegriff des Patentanspruches 1.

Insbesondere bei metallischen Hohlmasten, deren Innenraum von außen her nicht zugänglich ist, bleibt die Befestigung beispielsweise eines Verkehrsschildes, eines Profils od. dgl. durch eine Schraube mit Schwierigkeiten verbunden. Aus diesem Grunde beispielsweise werden Verkehrsschilder an Stangen oder Masten mittels Manschettenringen od. dgl. festgelegt.

Zwar ist es bekannt, an hohlen Wänden von Bauwerken Bilder, Regale od. dgl. mit Schrauben dadurch festzulegen, daß man in den Hohlraum hinter einer Bohrung einen Plastikdübel einführt, der dann durch einen eingesetzten Haken, eine Schraube od. dgl. verformt und als Widerlager an die Innenfläche der Wand angelegt wird. Jedoch ist es nicht günstig, derartige Plastikdübel dann anzuwenden, wenn vor allem metallische Profile der beschriebenen Art miteinander verbunden werden sollen.

Für hinterschnittene Nuten von Profilen sind sogenannte Nutensteine aus Metall bekannt, welche mit einem hammerkopfartigen Teil in die stirnseitige Öffnung der Nut eingeschoben werden und mit einer Gewindebohrung Schrauben oder Gewindestifte halten. Ist die Nuttiefe größer als die Dicke des Hammerkopfes, werden zwischen den Nutenstein und das Nutentiefste Schraubenfedern eingesetzt, welche den Hammerkopf innenseitig an das Werkstück drücken. Da die Federachse quer zur Verschieberichtung verläuft, fehlt es an ausreichender Lagesicherheit der Feder.

Die DE-A-17 75 246 zeigt ein System nach dem Oberbegriff des unabhängigen Patentanspruches mit einer Gleitmutter in Form einer flachen Platte, zu den parallelen Oberflächen rechtwinkelige Seiten- und Flankenflächen, in den Oberfläche eine etwa zentrische Vierkantausnehmung, eine exzentrische Gewindebohrung und eine schmale Federzunge aufweist; diese ist an einer - der in Draufsicht an einem Eck mit einer Längsseite zu dieser gerundeten - Schmalseite der Platte mittels eines U-förmigen Federabschnittes festgeklemmt. Die Höhe der in der Zeichnung dargestellten Platte entspricht etwa einem Drittel der lichten Höhe des hinterschnittenen Profilraumes. Durch Schwenken einer oder zweier solcher Gleitmuttern soll der Abstand der Gewindebohrungen voneinander variiert werden können.

Eine Platte mit zentrischer Gewindebohrung mit an der Plattenunterseite festliegender Federzunge offenbaren die GB-A-602 540 sowie die DE-A-26 35 439.

In Kenntnis dieses Standes der Technik hat sich der Erfinder das Ziel gesetzt, ein Element der eingangs genannten Art zu schaffen, das am Ort des Einsatzes von außen her in die Nut eingesetzt werden kann, also nicht an der Nutstirnseite eingeführt und dann in ihr entlang geschoben werden muß, und das zudem eine im federnden Abstand zum Nutentiefsten sichere Lage gewährleistet.

Zur Lösung dieser Aufgabe führt die Lehre des unabhängigen Anspruches, die Unteransprüche geben günstige Weiterentwicklungen an.

Erfindungsgemäß ist das Element etwa quaderförmig ausgebildet und weist wenigstens zwei einander gegenüberliegende, von der ersten Oberfläche in einem Winkel geneigte Flankenwände auf, wobei das Federorgan einerseits an einer der geneigten Flankenwände festliegt sowie anderseits die engere der Oberflächen des Elements übergreift. Wird das Federorgan an das Mutterelement angedrückt, kann dieses -- mit seiner Schmalseite zuerst -- ohne weiteres in die Nut eingeschoben werden. Dank der geneigten Seitenflächen ist es dann problemlos innerhalb der Nut in die richtige Position drehbar.

Dieses Federorgan ist in einer Ausgestaltung eine blattförmige Feder mit einer Kante als freiem Ende, die bevorzugt oberhalb einer etwa Diagonalen der benachbarten Elementoberfläche verläuft. Jedoch kann als Federorgan auch ein Drahtbügel vorgesehen sein, welcher vorteilhafterweise oberhalb jener Diagonalen verläuft.

Bei einer anderen Ausführung wird ein Bügelorgan beidends an den Stirnflächen des Mutterelements so festgelegt, daß es in Abstand zu dessen Oberfläche einen federnden Druckabschnitt anbietet.

Das Federorgan ist mit dem mutterartigen Element untrennbar verbunden und ergänzt es zu einer Befestigungseinheit mit Spreizkraft.

Nach weiteren Maßgaben der Erfindung ist das Verhältnis der Höhe des Elements zur Nutbreite etwa 0,75 -- dies im übrigen ebenso zur Breite seiner federnahen Oberfläche --, wobei diese Höhe bevorzugt 6 mm mißt.

Eine weitere Ausführung des Elements weist vier geneigte Eckkanten auf, an welche der Rand einer Bohrung angesetzt wird; jede der Eckkanten kerbt sich unter Zug in den Bohrungsrand ein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: den Querschnitt durch ein Profil mit in diesen angeordneten Nutensteinen;
- Fig. 2:: eine teilweise geschnittene Draufsicht auf Fig. 1;
- Fig. 3:: einen Nutenstein in Draufsicht;
- Fig. 4:: eine Schrägsicht auf den Nutenstein;
- Fig. 5:: die Draufsicht auf einen anderen Nutenstein;
- Fig. 6:: die Seitenansicht zu Fig. 5;
- Fig. 7:: eine Schrägsicht auf eine weitere Ausführung eines Nutensteins;

Ein stranggepreßtes Profil 10 mit durch dessen zentrischen Rohrabschnitt 12 gelegten Querschnittsachsen A,B als Symmetrieachsen weist jeweils in der Mitte seiner Seitenwände 14 eine hinterschnittene Längsnut 16 auf, deren oberflächennaher Nutenschlitz 17 eine Breite a von beispielsweise 8 mm besitzt; an der Wandoberfläche wird der Nutenschlitz 17 von seitlichen Formrippen 18 einer Dicke b von 4 mm begrenzt, welche eine rinnenartige Ausnehmung etwa dreiecksförmigen Querschnittes einer Tiefe t von 10 mm und einer maximalen Breite e von 22 mm als hinterschnittenen Nutenbereich 20 übergreifen. Das Nutentiefste 22 wird von der Außenfläche des zentrischen Rohrabschnittes 12 des Profils 10 angeboten.

In den hinterschnittenen Nutenbereich 20 wird eine Befestigungseinheit 24 aus ein aus einer Stahllegierung geformten Nutenstein 25 einer Länge n von hier 16 mm und einer Höhe h von 6 mm sowie einer Federzunge 28 eingesetzt. Die Grundbreite i des Nutensteins 25 mißt 12 mm, von der er sich zu einer Breite il von 8 mm querschnittlich verjüngt, d.h. die sich in Längsrichtung erstreckenden Flankenflächen 26 sind in einem Winkel w von etwa 20° geneigt, die beiden Stirnflächen 27 zueinander parallel. Die Federzunge 28 ist einends an einer der Flankenflächen 26 festgelegt, und ihre freie Kante 29 verläuft zu der ihr zugekehrten Stirnfläche 30 diagonal.

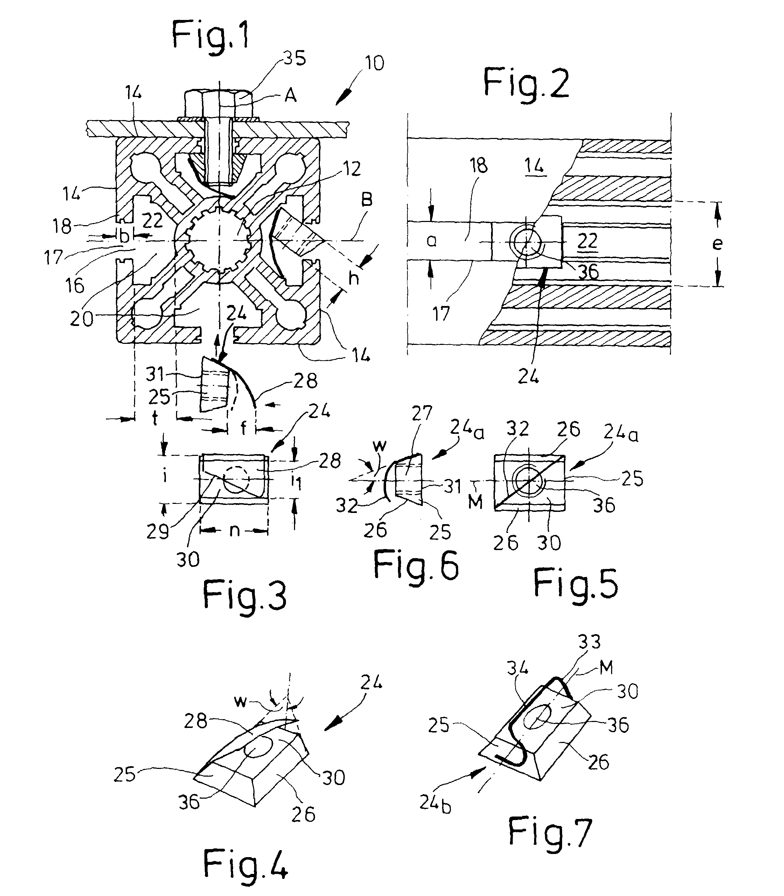

In Fig. 1, unten, ist die Federzunge 28 in entspannter Lage zu erkennen, in welcher ihr Kantenabstand f zur Stirnfläche 30 etwa 8 mm beträgt.

Um den Nutenstein 25 in den hinterschnittenen Bereich 20 einzusetzen, wird die Federzunge 28 zur Stirnfläche 30 hin gedrückt, der Nutenstein 25 seitlich eingeführt (Fig. 1, rechte Seite) und dann mit seiner größeren Oberfläche 31 nach außen gedreht, bis die Haltestellung gemäß Fig.1, oben, erreicht ist: in dieser stützt sich die Kante 29 der Federzunge 28 am Nutentiefsten 22 ab und drückt jene Oberfläche 31 beidseits des Nutenschlitzes 17 diagonal an die Innenfläche der Formrippen 18 an. Das Einführen einer Schraube 35 oder dgl. stiftartigen Befestigungselementes in eine zentrale Gewindebohrung 36 des Nutensteins 25 ist nunmehr problemlos möglich.

Beim Ausführungsbeispiel der Fig. 5,6 ist am Nutenstein 25 der Befestigungseinheit 24a statt der Federzunge ein Drahtbügel 32 einends an der einen Flankenfläche 26 festgelegt, welcher die Gewindebohrung 36 diagonal übergreift und dessen freies Ende in entspannter Bügelstellung ebenfalls in Abstand zur Stirnfläche 30 steht. Fig. 7 zeigt eine Befestigungseinrichtung 24b, an deren Nutenstein 25 ein Drahtbügel 33 mit beiden S-förmig gebogenen Enden so angelötet ist, daß ein Druckabschnitt 34 in Abstand zur Stirnfläche 30 parallel zur Längsachse M des Nutensteins 25 verläuft

## Patentansprüche

1. Verbindungseinrichtung zum Anschluß eines ersten Werkstückes an ein anderes Werkstück, mittels einer Schraube od. dgl. Organs, deren/dessen Schaft den engen Öffnungsquerschnitt (17) einer hinterschnittenen Nut (20) des anderen Werkstückes durchsetzt und in eine Ausnehmung (36) eines mutterartigen Elements (24) ein gesetzt ist, das eine erste Oberfläche (31) mit wenigstens einer die Breite des engen Öffnungsquerschnitts (17) der Nut (20) übersteigenden Erstreckung besitzt sowie in einem dem engen Öffnungsquerschnitt (17) nachgeordneten hinterschnittenen Innenraum (20) des anderen Werkstücks angeordnet ist, wobei einer der von jener ersten Oberfläche (31) ausgehenden Flankenwände (25,26) des mutterartigen Elements (24) ein Federorgan (28,32,33) einends zugeordnet ist, das eine weitere Oberfläche des Elements (24) mit seinem freien Ende (29) übergreift,
dadurch gekennzeichnet,
daß das Element (24,24ₐ) quaderförmig ausgebildet ist sowie wenigstens zwei einander gegenüberliegende, von der ersten Oberfläche in einem Winkel (w) zueinander geneigte Flankenwände (26) aufweist, wobei das Federorgan (28,32) einerseits an einer der geneigten Flankenwände festliegt sowie anderseits die engere der Oberflächen (30) des Elements übergreift.

2. Verbindungseinrichtung nach Anspruch 1, dadurch gekennzeichnet, daß das Federorgan (28) einends an einer geneigten Flankenwand (26) festliegt sowie mit dem freien anderen Ende oder Kante (29) die engere Oberfläche (30) des Elements (24) übergreift.

3. Verbindungseinrichtung nach Anspruch 1 oder 2, dadurch gekennzeichnet, daß die freie Kante (29) des blattförmigen Federorgans (28) etwa in einer Diagonalen der benachbarten Oberfläche (30) des Elements (24) verläuft.

4. Verbindungseinrichtung nach Anspruch 1, dadurch gekennzeichnet, daß das Federorgan (32,34) bügelartig ausgebildet ist sowie beidends an jeweils einer geneigten Flankenwand (25) festliegt, wobei es die engere Oberfläche (30) des Elements (24ₐ,24_{b}) übergreift.

5. Verbindungseinrichtung nach Anspruch 1 oder 4, dadurch gekennzeichnet, daß das bügelartige Federorgan (32) einends festliegt sowie in einer Diagonalen der benachbarten Oberfläche (30) des Elements (24ₐ) verläuft.

6. Verbindungseinrichtung nach einem der Ansprüche 1 bis 5, gekennzeichnet durch ein Verhältnis seiner Höhe (h) zum maximalen Kantenabstand (f) des blattförmigen Federorgans (28) zur benachbarten Oberfläche (30) von 0,75.

7. Verbindungseinrichtung nach einem der Ansprüche 1 bis 5, gekennzeichnet durch ein Verhältnis seiner Höhe (h) zur Breite (i1) seiner federnahen Oberfläche (30) von etwa 0,75 und durch ein Verhältnis seiner Höhe (h) zur Breite (i) seiner federfernen Oberfläche (31) von etwa 0,5.

8. Verbindungseinrichtung nach einem der Ansprüche 1 bis 7, dadurch gekennzeichnet, daß es vier geneigte Eckkanten aufweist.

9. Verbindungseinrichtung nach einem der Ansprüche 1 bis 8, gekennzeichnet durch einen Neigungswinkel (w) der Flankenwände (26) von etwa 20°.

## Claims

1. Connecting device for connecting a first workpiece to another workpiece, by means of a screw or the like member, the shaft of which penetrates the narrow opening cross-section (17) of an undercut groove (20) of the other workpiece, and is inserted into an aperture (36) of a nut-like member (24), which has a first surface (31) with at least one extension projecting over at least the width of the narrow opening cross-section (17), and is located in an undercut interior space (20) of the other workpiece subsequent to the narrow opening cross-section (17), one of the flank walls (25,26) of the nut-like member (24) emerging from that first surface (31) being associated at one end with a spring member (28,32,33), which engages over a further surface of the member (24) with its free end (29),
characterised in that
the member (24,24ₐ) is parallelepipedic in form and has at least two mutually-opposed flank walls (26) inclined towards one another from the first surface at an angle (w), the spring member (28,32) being secured at one end on one of the inclined flank walls and engaging at the other end over the narrower of the surfaces (30) of the member.

2. Connecting device according to claim 1,
characterised in that the spring member (28) is secured at one end on an inclined flank wall (26), and engages with the free other end or edge (29) over the narrower surface (30) of the member (24).

3. Connecting device according to claim 1 or 2, characterised in that the free edge (29) of the leaf-shaped spring member (28) extends approximately in a diagonal of the adjacent surface (30) of the member (24).

4. Connecting device according to claim 1, characterised in that the spring member (32,34) is arcuate in form and is secured at both ends respectively on an inclined flank wall (25), engaging over the narrower surface (30) of the element (24ₐ, 24_{b}).

5. Connecting device according to claim 1 or 4, characterised in that the arcuate spring member (32) is secured at one end and extends in a diagonal of the adjacent surface (30) of the member (24ₐ).

6. Connecting device according to one of claims 1 to 5, characterised by a ratio of its height (h) to the maximum edge spacing (f) of the leaf-shaped spring member (28) to the adjacent surface 930) of 0.75.

7. Connecting device according to one of claims 1 to 5, characterised by a ratio of its height (h) to the width (i1) of its surface (30) close to the spring of approximately 0.75 and by a ratio of its height (h) to the width (i) of its surface (31) remote from the spring of approximately 0.5.

8. Connecting device according to one of claims 1 to 7, characterised in that it has four inclined corner edges.

9. Connecting device according to one of claims 1 to 8, characterised by an angle of inclination (w) of the flank walls (26) of about 20°.

## Revendications

1. Dispositif de liaison pour le raccordement d'une première pièce façonnée à une autre pièce façonnée, au moyen d'une vis ou d'un organe similaire, dont la tige traverse la section transversale étroite d'ouverture (17) d'une rainure (20) en contre-dépouille de l'autre pièce façonnée et vient se loger dans une cavité ou alésage fileté (36) d'un élément (24) du genre écrou, qui présente une première surface (31) s'étendant en la dépassant sur au moins la largeur de la section transversale étroite d'ouverture (17) de la rainure (20) et qui est disposé également dans un espace intérieur (20) en contre-dépouille disposé à la suite de la section transversale étroite d'entrée (17) de l'autre pièce façonnée, dans lequel dispositif de liaison une paroi de flanc (25, 26) de l'élément (24) du genre écrou partant de cette première surface (31), est associée à une extrémité d'un organe élastique (28, 32, 33) qui recouvre par son extrémité libre (29) une autre surface de l'élément (24), le dispositif étant caractérisé en ce que l'élément (24, 24a) présente une forme parallélipipédique et comporte également au moins deux parois de flancs (26) opposées l'une à l'autre et inclinées chacune en opposition l'une par rapport à l'autre à partir de la première surface d'un angle (w), et en ce que l'organe élastique (28, 32) d'une part est fixé rigidement à l'une des parois de flanc inclinées et d'autre part recouvre également la plus étroite des surfaces (30) de l'élément.

2. Dispositif de liaison selon la revendication 1, caractérisé en ce que l'organe élastique (28) est fixé à une extrémité à une paroi de flanc inclinée (26) et en ce que l'autre extrémité ou bord (29) libre recouvre également la surface plus étroite (30) de l'élément (24).

3. Dispositif de liaison selon la revendication 1 ou 2, caractérisé en ce que le bord libre (29) de l'organe élastique en forme de lame (28) s'étend sensiblement selon une diagonale de la surface voisine (30) de l'élément (24).

4. Dispositif de liaison selon la revendication 1, caractérisé en ce que l'organe élastique (32, 34) est réalisé en forme d'étrier et est également fixé à chacune de ses deux extrémités à une paroi de flanc inclinée (25) et en ce qu'il recouvre la surface plus étroite (30) de l'élément (24a, 24b).

5. Dispositif de liaison selon la revendication 1 ou 4, caractérisé en ce que l'organe élastique du genre étrier (32) est fixé à une extrémité et s'étend également selon une diagonale de la surface voisine (30) de l'élément (24a).

6. Dispositif de liaison selon l'une quelconque des revendications 1 à 5, caractérisé en ce que le rapport entre sa hauteur (h) et la distance maximale (f) par rapport à la surface voisine de l'arête de l'organe élastique en forme de lame (28), par rapport à la surface voisine (30), est de 0,75.

7. Dispositif de liaison selon l'une quelconque des revendications 1 à 5, caractérisé en ce que le rapport entre sa hauteur (h) et la largeur (i1) de sa surface (30) proche de l'organe élastique, est d'environ 0,75 et en ce que le rapport entre sa hauteur (h) et la largeur (i) de sa surface (31) éloignée de l'organe élastique, est d'environ 0,5.

8. Dispositif de liaison selon l'une quelconque des revendications 1 à 7, caractérisé en ce qu'il comporte quatre arêtes de coin inclinées.

9. Dispositif de liaison selon l'une quelconque des revendications 1 à 8. caractérisé par un angle d'inclinaison (w) des parois de flanc (26) d'environ 20°.
